(19) Europäisches Patentamt
European Patent Office
Office européen des brevets

(11) EP 2 985 148 A1

(12) **EUROPEAN PATENT APPLICATION**
published in accordance with Art. 153(4) EPC

(43) Date of publication:
**17.02.2016 Bulletin 2016/07**

(21) Application number: **14782960.0**

(22) Date of filing: **02.04.2014**

(51) Int Cl.:
***B32B 27/32*** *(2006.01)* ***B32B 1/08*** *(2006.01)*
***C08G 69/40*** *(2006.01)*

(86) International application number:
**PCT/JP2014/059768**

(87) International publication number:
**WO 2014/168059 (16.10.2014 Gazette 2014/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.04.2013 JP 2013081476**
**09.04.2013 JP 2013081482**

(71) Applicant: **Mitsubishi Gas Chemical Company, Inc.**
**Tokyo 100-8324 (JP)**

(72) Inventors:
- **SATO, Kazuya**
**Hiratsuka-shi**
**Kanagawa 254-0016 (JP)**
- **KATO, Tomonori**
**Hiratsuka-shi**
**Kanagawa 254-0016 (JP)**
- **KIKUCHI, Mayumi**
**Hiratsuka-shi**
**Kanagawa 254-0016 (JP)**

(74) Representative: **Vossius & Partner Patentanwälte Rechtsanwälte mbB**
**Siebertstrasse 3**
**81675 München (DE)**

# (54) MULTILAYERED STRUCTURE

(57) Provided are a multilayer structure including a polyamide layer (A) and a polyether polyamide layer (B) and also a multilayer structure including a polyolefin layer (C) and a polyether polyamide layer (B), wherein the polyamide layer (A) contains a polyamide (a) in which a diamine constituent unit thereof includes a constituent unit derived from a xylylenediamine (a-1), and a dicarboxylic acid constituent unit thereof includes a constituent unit derived from an $\alpha,\omega$-linear aliphatic dicarboxylic acid (a-2) having from 4 to 20 carbon atoms; and the polyether polyamide layer (B) contains a polyether polyamide (b) in which a diamine constituent unit thereof includes constituent units derived from a polyether diamine compound (b-1) having a specified structure and a xylylenediamine (b-2), and a dicarboxylic acid constituent unit thereof includes a constituent unit derived from an $\alpha,\omega$-linear aliphatic dicarboxylic acid (b-3) having from 4 to 20 carbon atoms.



Printed by Jouve, 75001 PARIS (FR)

## Description

### Technical Field

The present invention relates to a multilayer structure which is excellent in terms of pinhole resistance, oxygen barrier properties, and interlaminar adhesion strength and also to a multilayer structure which is excellent in terms of flexibility and fuel barrier properties.

### Background Art

In order to suppress deteriorations of foods attributable to oxygen, such as change of properties, putrefaction, oxidation, etc., resins with oxygen barrier properties are used as a food packaging material. Above all, poly-m-xylylene adipamide (MXD6) is known as a resin with excellent oxygen barrier properties, and it is used as a packing material for a wide variety of foods.

Meanwhile, since MXD6 is inferior in flexibility and poor in pinhole resistance, there are made a variety of investigations for making it suitable for food packaging materials exhibiting high gas barrier properties while improving deterioration of the pinhole resistance. For example, PTL 1 proposes a laminated film in which a polyamide layer containing a specified fatty acid-based bisimide and a modified polyolefin in a specified proportion is laminated on the both surfaces of an MXD6 layer. In addition, in the working examples of PTL 1, nylon 6 is used as the above-described polyamide layer, and a laminated film in which an unstretched sheet having a layer configuration of nylon 6/adhesive/MXD6/adhesive/nylon 6 in thicknesses of the respective layers of 45/5/50/5/45 μm is stretched in a thickness of 15 μm by using a biaxial stretching machine is disclosed.

In addition, polyolefin-made cylindrical molded bodies, such as a hose, a tube, a pipe, etc., have hitherto been known. The polyolefin-made cylindrical molded bodies are used for a variety of applications because of their high chemical resistance and used as, for example, water service piping for supplying tap water to each house.

In supplying tap water to each house, water service piping is buried under the ground from a tap water main pipe to each house. Among the polyolefin-made cylindrical molded bodies, a polyethylene-made cylindrical molded body is lightweight and excellent in flexibility, and is suitable for being conveyed, at a state where it is wound around a winding core, into a job site at which the water service piping is buried. For those reasons, in general, a polyethylene pipe is used for the water service piping and widely diffused.

Meanwhile, fuel piping, such as kerosene piping, etc., is also buried under the ground. For this fuel piping, a lot of copper-made pipes are chiefly used, and there may be the case where a slight fuel leak in the ground is generated due to deterioration of the fuel piping. For that reason, in the case where the fuel piping is buried in the vicinity of the water service piping buried under the ground, the fuel leaked from the fuel piping pentrates into water in the polyethylene pipe, thereby causing such a problem that the tap water is scented with a fuel smell.

In order to solve the foregoing problem, for example, PTL 2 proposes a method in which a metal laminate film in which a resin layer and a metal layer are laminated is used as a protective cover for water service piping, and water service piping to be buried under the ground is covered by the protective cover for water service piping.

### Citation List

#### Patent Literature

PTL 1: JP-A-2007-136874
PTL 2: Japanese Patent No. 4230060

### Summary of Invention

#### Technical Problem

However, in the laminated film as disclosed in PTL 1, in which nylon 6 is laminated on the both surfaces of the MXD6 layer, since nylon 6 is inferior in oxygen barrier properties, the MXD6 layer was required to have a thickness of a fixed value or more. In addition, in order to obtain interlaminar adhesion of the laminated film, it was needed to laminate nylon 6 and MXD6 via an adhesive layer. In the light of the above, any laminated film that satisfies all of pinhole resistance, oxygen barrier properties, and interlaminar adhesion strength has not been provided yet. For that reason, there was room for improving the above-described properties of the laminated film having oxygen barrier properties.

Meanwhile, according to the method disclosed in PTL 2, since it is needed to perform processing for further covering the once molded piping by the protective cover, this method is inferior in productivity of the water service piping, and its work is complicated. Thus, it is hard to say that the method is practical. For that reason, fuel barrier properties of the water service piping alone are demanded without necessity of a protective cover or the like.

A problem of the present invention is to provide a multilayer structure having a polyamide layer with oxygen barrier properties, such as MXD6, etc., and excellent in terms of pinhole resistance, oxygen barrier properties, and interlaminar adhesion strength.

Furthermore, a problem of the present invention is to provide a multilayer structure excellent in terms of flexibility and fuel barrier properties such that it is applicable to water service piping, while having excellent flexibility as in polyolefin-made products.

Solution to Problem

The present inventors have found that in a multilayer structure, such as a sheet, a film, etc., the foregoing problem can be solved by using a specified polyether polyamide layer for at least one layer of the multilayer structure, leading to accomplishment of the present invention.

Furthermore, the present inventors have found that in a multilayer structure, such as a cylindrical molded body, etc., the foregoing problem can be solved by using a multilayer structure having a polyolefin layer and a specified polyether polyamide layer, leading to accomplishment of the present invention.

Specifically, the present invention is concerned with the following multilayer structures.

<1> A multilayer structure including a polyamide layer (A) and a polyether polyamide layer (B), wherein

the polyamide layer (A) contains a polyamide (a) in which a diamine constituent unit thereof includes a constituent unit derived from a xylylenediamine (a-1), and a dicarboxylic acid constituent unit thereof includes a constituent unit derived from an $\alpha,\omega$-linear aliphatic dicarboxylic acid (a-2) having from 4 to 20 carbon atoms; and
the polyether polyamide layer (B) contains a polyether polyamide (b) in which a diamine constituent unit thereof includes constituent units derived from a polyether diamine compound (b-1) represented by the following general formula (1) and a xylylenediamine (b-2), and a dicarboxylic acid constituent unit thereof includes a constituent unit derived from an $\alpha,\omega$-linear aliphatic dicarboxylic acid (b-3) having from 4 to 20 carbon atoms:

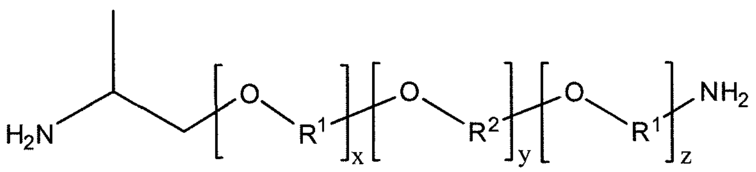

(1)

(In the formula, (x + z) represents 1 to 60; y represents 1 to 50; each $-OR^1-$ independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.)

<2> The multilayer structure as set forth in the above <1>, wherein the multilayer structure is a sheet or a film.

<3> A multilayer structure including a polyolefin layer (C) and a polyether polyamide layer (B), wherein the polyether polyamide layer (B) contains a polyether polyamide (b) in which a diamine constituent unit thereof includes constituent units derived from a polyether diamine compound (b-1) represented by the foregoing general formula (1) and a xylylenediamine (b-2), and a dicarboxylic acid constituent unit thereof includes a constituent unit derived from an $\alpha,\omega$-linear aliphatic dicarboxylic acid (b-3) having from 4 to 20 carbon atoms.

<4> The multilayer structure as set forth in the above <3>, wherein the multilayer structure is a cylindrical molded body.

<5> The multilayer structure as set forth in the above <3> or <4>, wherein the multilayer structure is water service piping.

Advantageous Effects of Invention

The present invention is able to provide a multilayer structure excellent in terms of pinhole resistance, oxygen barrier properties, and interlaminar adhesion strength by using a specified polyether polyamide layer for at least one layer of the multilayer structure, and furthermore, the present invention is able to provide a sheet or film with the above-described properties, which is suitable as a food packaging material.

Furthermore, the present invention is able to provide a multilayer structure excellent in terms of flexibility and fuel barrier properties while having excellent flexibility as in polyolefin-made cylindrical molded bodies, and furthermore, the present invention is able to provide water service piping having the above-described properties of the multilayer structure.

Description of Embodiments

The multilayer structure of the present invention has at least a polyamide layer (A) and a polyether polyamide layer (B) as configuration layers. The multilayer structure having such a layer configuration is hereinafter referred to as "first multilayer structure".

In addition, the multilayer structure of the present invention has at least a polyolefin layer (C) and a polyether polyamide layer (B) as configuration layers. The multilayer structure having such a layer configuration is hereinafter referred to as "second multilayer structure".

Examples of specific modes of the first and second multilayer structures of the present invention are hereunder explained.

Incidentally, the terms "containing as a main component" as referred to in this specification mean the gist that it is permissible to contain other component within the range where the effects of the multilayer structure of the present invention are not hindered. Specifically, the main component means a component occupying in a content ranging about 80% by mass or more, and preferably 90% or more and 100% by mass or less in the whole of components constituting each layer. However, it should not be construed that the terms "containing as a main component" are specified to the above-described content.

[Polyamide layer (A)]

The first multilayer structure of the present invention includes a polyamide layer (A) as a configuration layer.

The polyamide layer (A) is a layer containing a polyamide (a) as a main component. In the polyamide (a), a diamine constituent unit thereof includes a constituent unit derived from a xylylenediamine (a-1), and a dicarboxylic acid constituent unit thereof includes a constituent unit derived from an $\alpha,\omega$-linear aliphatic dicarboxylic acid (a-2) having from 4 to 20 carbon atoms.

In view of the fact that the first multilayer structure of the present invention includes the above-described polyamide layer (A), excellent oxygen barrier properties can be given to the first multilayer structure.

(Diamine constituent unit)

In the diamine constituent unit, a content of the constituent unit derived from the xylylenediamine (a-1) is preferably 70 to 100% by mole, more preferably 80 to 100% by mole, and still more preferably 90 to 100% by mole.

The xylylenediamine (a-1) is preferably m-xylylenediamine, p-xylylenediamine, or a mixture thereof, more preferably m-xylylenediamine or a mixture of m-xylylenediamine and p-xylylenediamine, and still more preferably m-xylylenediamine.

In the case of using m-xylylenediamine as the xylylenediamine (a-1), the resulting polyamide is more enhanced in oxygen barrier properties and also excellent in terms of crystallinity, melt moldability, molding processability, and toughness.

In addition, in the case of using a mixture of m-xylylenediamine and p-xylylenediamine as the xylylenediamine (a-1), a proportion of p-xylylenediamine is preferably 90% by mole or less, more preferably 1 to 80% by mole, still more preferably 1 to 70% by mole, and yet still more preferably 5 to 70% by mole relative to a total amount of m-xylylenediamine and p-xylylenediamine.

As described above, though the diamine constituent unit that constitutes the polyamide (a) includes the constituent unit derived from the xylylenediamine (a-1), it may further include a constituent unit derived from other diamine compound within the range where the effects of the present invention are not hindered.

As the diamine compound which may constitute a diamine constituent unit other than the xylylenediamine (a-1), there can be exemplified aliphatic diamines, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, 2,4,4-trimethylhexamethylenediamine, etc.; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4- aminocyclohexyl) methane, 2,2-bis(4-aminocyclohexyl)propane, bis(aminomethyl)decalin, bis(aminomethyl)tricyclodecane, etc.; diamines having an aromatic ring, such as bis(4-aminophenyl) ether, p-phenylenediamine, bis(aminomethyl)naphthalene, etc.; and the like. However, it should not be construed that the diamine compound is limited to these compounds. These diamine compounds may be used solely or in combination of two or more kinds thereof and may be used in combination with the xylylenediamine.

(Dicarboxylic acid constituent unit)

In the dicarboxylic acid constituent unit, a content of the constituent unit derived from the α,ω-linear aliphatic dicarboxylic acid (a-2) having from 4 to 20 carbon atoms is preferably 70 to 100% by mole, more preferably 80 to 100% by mole, and still more preferably 90 to 100% by mole.

As the α,ω-linear aliphatic dicarboxylic acid (a-2) having from 4 to 20 carbon atoms, there can be exemplified succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, and the like. Of these, at least one selected from the group consisting of adipic acid and sebacic acid is preferred from the viewpoints of crystallinity and high elasticity, and adipic acid is more preferred from the viewpoint of gas barrier properties in addition to the crystallinity and high elasticity. These carboxylic acids may be used solely or in combination of two or more kinds thereof.

As described above, though the dicarboxylic acid constituent unit that constitutes the polyamide (a) includes the constituent unit derived from the α,ω-linear aliphatic dicarboxylic acid (a-2) having from 4 to 20 carbon atoms, it may also include a constituent unit derived from other dicarboxylic acid within the range where the effects of the present invention are not hindered.

As the dicarboxylic acid which can be used other than the α,ω-linear aliphatic dicarboxylic acid (a-2) having from 4 to 20 carbon atoms, there can be exemplified aliphatic dicarboxylic acids, such as oxalic acid, malonic acid, etc.; aromatic dicarboxylic acids, such as terephthalic acid, isophthalic acid, 2,6-naphthalenedicarboxylic acid, etc.; and the like. However, it should not be construed that the dicarboxylic acid is limited thereto. These dicarboxylic acids may be used solely or in combination of two or more kinds thereof and may be used in combination with the α,ω-linear aliphatic dicarboxylic acid having from 4 to 20 carbon atoms.

In addition, in the case of using a mixture of the α,ω-linear aliphatic dicarboxylic acid (a-2) having from 4 to 20 carbon atoms and isophthalic acid, the heat resistance and molding processability of the polyamide (A) can be enhanced. A molar ratio of the α,ω-linear aliphatic dicarboxylic acid (a-2) having from 4 to 20 carbon atoms and isophthalic acid ((α,ω-linear aliphatic dicarboxylic acid (a-2) having from 4 to 20 carbon atoms)/(isophthalic acid)) is preferably from 50/50 to 99/1, and more preferably from 70/30 to 95/5.

(Physical properties of polyamide (a))

A melting point of the polyamide (a) is preferably in the range of 170 to 270°C, more preferably in the range of 175 to 270°C, still more preferably in the range of 180 to 270°C, and yet still more preferably in the range of 180 to 260°C from the viewpoints of heat resistance and melt moldability. The melting point is measured by using a differential scanning calorimeter.

A relative viscosity of the polyamide (a) is preferably in the range of 1.7 to 4.0, and more preferably in the range of 1.9 to 3.8 from the viewpoints of moldability and melt mixing properties with other resin. The relative viscosity is a ratio of a fall time (t) obtained by dissolving 0.2 g of a sample in 20 mL of 96% by mass sulfuric acid and measuring the resulting solution at 25°C by a Cannon-Fenske viscometer to a fall time (to) of the 96% by mass sulfuric acid itself as similarly measured and is expressed according to the following equation.

$$\text{Relative viscosity} = t/t_0$$

In the present invention, as for the above-described polyamide (a), poly-m-xylylene adipamide (MXD6), poly-m-xylylene adipamide isophthalamide (MXD6I), and the like are preferably used.

In the above-described polyamide (a), MXD6 in which the xylylenediamine (a-1) is m-xylylenediamine and the α,ω-linear aliphatic dicarboxylic acid (a-2) is adipic acid is especially suitable. By using MXD6 as the above-described polyamide (a), more excellent gas barrier properties can be given to the first multilayer structure of the present invention, and in addition thereto, strength, elastic modulus, molding processability, and the like can be enhanced.

[Polyether polyamide layer (B)]

Each of the first and second multilayer structures of the present invention includes a polyether polyamide layer (B) as a configuration layer.

The polyether polyamide layer (B) is a layer containing a polyether polyamide (b) as a main component. The

polyether polyamide (b) is a polyether polyamide in which a diamine constituent unit thereof includes constituent units derived from a polyether diamine compound (b-1) represented by the following general formula (1) and a xylylenediamine (b-2), and a dicarboxylic acid constituent unit thereof includes a constituent unit derived from an $\alpha,\omega$-linear aliphatic dicarboxylic acid (b-3) having from 4 to 20 carbon atoms.

In view of the fact that the first multilayer structure of the present invention includes the above-described polyether polyamide layer (B), the first multilayer structure can be given flexibility and is excellent in pinhole resistance, and the polyether polyamide layer (B) itself exhibits oxygen barrier properties. Therefore, by laminating the polyether polyamide layer (B) together with the polyamide layer (A), the first multilayer structure exhibiting more excellent oxygen barrier properties can be provided. In addition, since the polyether polyamide layer (B) has adhesiveness, even if the first multilayer structure does not include an adhesive layer, it is excellent in interlaminar adhesion strength. Furthermore, in view of the fact that the second multilayer structure of the present invention includes the above-described polyether polyamide layer (B), excellent fuel barrier properties can be revealed without hindering flexibility of the polyolefin layer.

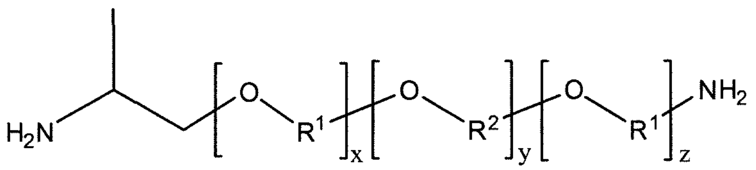
(1)

In the formula, (x + z) represents 1 to 60; y represents 1 to 50; each $-OR^1-$ independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.

(Diamine constituent unit)

The diamine constituent unit that constitutes the polyether polyamide (b) includes constituent units derived from the polyether diamine compound (b-1) represented by the foregoing general formula (1) and the xylylenediamine (b-2).

In the above-described diamine constituent unit, a total sum content of the constituent units derived from the polyether diamine compound (b-1) and the xylylenediamine (b-2) is preferably 50 to 100% by mole, more preferably 70 to 100% by mole, still more preferably 80 to 100% by mole, and yet still more preferably 90 to 100% by mole.

(Polyether diamine compound (b-1))

The diamine constituent unit that constitutes the polyether polyamide (b) includes a constituent unit derived from the polyether diamine compound (b-1) represented by the foregoing general formula (1). In the foregoing general formula (1), (x + z) is 1 to 60, preferably 2 to 40, more preferably 2 to 30, still more preferably 2 to 20, and yet still more preferably 2 to 15. In addition, y is 1 to 50, preferably 1 to 40, more preferably 1 to 30, and still more preferably 1 to 20. In the case where the values of x, y, and z are more than the above-described ranges, the compatibility with an oligomer or a polymer each composed of the xylylenediamine and the dicarboxylic acid produced on the way of the reaction of melt polymerization is low, so that the polymerization reaction becomes hard to proceed.

In addition, in the foregoing general formula (1), each $-OR^1-$ independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.

A number average molecular weight of the polyether diamine compound (b-1) is preferably 176 to 7,000, more preferably 176 to 5,700, still more preferably 200 to 5,000, yet still more preferably 200 to 4,000, even yet still more preferably 300 to 3,500, even still more preferably 400 to 2,500, even still more further preferably 400 to 2,000, and even yet still more further preferably 500 to 1,800. So long as the number average molecular weight of the polyether diamine compound falls within the foregoing range, in the first and second multilayer structures, a polymer that reveals functions, such as flexibility, rubber elasticity, etc., can be obtained, and in the first multilayer structure, a polymer capable of suppressing the generation of a pinhole at the time of bending can be obtained.

The polyether diamine compound (b-1) represented by the foregoing general formula (1) is specifically a polyether diamine compound represented by the following general formula (1-1) or (1-2) from the viewpoint of making the first multilayer structure excellent in terms of gas barrier properties, pinhole resistance, and interlaminar adhesion strength and from the viewpoint of making the second multilayer structure excellent in fuel barrier properties without hindering flexibility of the polyolefin layer.

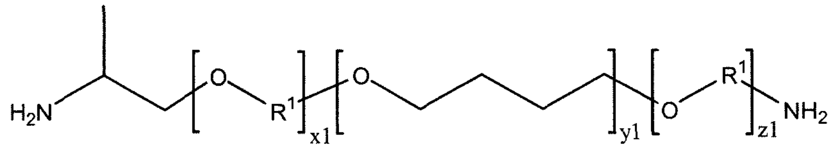

(1-1)

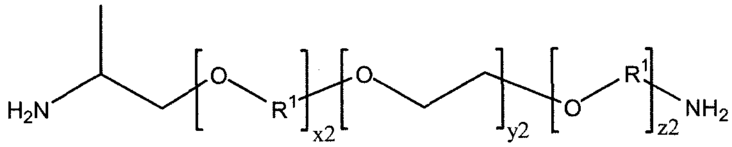

(1-2)

In the general formula (1-1), (x1 + z1) represents 1 to 60; y1 represents 1 to 50; and $-OR^1-$ represents $-OCH_2CH_2CH_2-$, $-OCH(CH_3)CH_2-$, or $-OCH_2CH(CH_3)-$.

In the general formula (1-2), (x2 + z2) represents 1 to 60; y2 represents 1 to 50; and $-OR^1-$ represents $-OCH_2CH_2CH_2-$, $-OCH(CH_3)CH_2-$, or $-OCH_2CH(CH_3)-$.

In the foregoing general formula (1-1), the numerical value of (x1 + z1) is 1 to 60, preferably 2 to 40, more preferably 2 to 30, still more preferably 2 to 20, and yet still more preferably 2 to 15. In addition, the numerical value of y1 is 1 to 50, preferably 1 to 40, more preferably 1 to 30, and still more preferably 1 to 20.

In the foregoing general formula (1-2), the numerical value of (x2 + z2) is 1 to 60, preferably 2 to 40, more preferably 2 to 30, still more preferably 2 to 20, and yet still more preferably 2 to 15. In addition, the numerical value of y2 is 1 to 50, preferably 1 to 40, more preferably 1 to 30, and still more preferably 1 to 20.

Incidentally, these polyether diamine compounds (b-1) may be used solely or in combination of two or more kinds thereof.

A number average molecular weight of the polyether diamine compound represented by the foregoing general formula (1-1) is preferably 204 to 7,000, more preferably 250 to 5,000, still more preferably 300 to 3,500, yet still more preferably 400 to 2,500, and even yet still more preferably 500 to 1,800.

A number average molecular weight of the polyether diamine compound represented by the foregoing general formula (1-2) is preferably 176 to 5,700, more preferably 200 to 4,000, still more preferably 300 to 3,000, yet still more preferably 400 to 2,000, and even yet still more preferably 500 to 1,800.

<Xylylenediamine (b-2)>

The diamine constituent unit that constitutes the polyether polyamide (b) includes a constituent unit derived from the xylylenediamine (b-2). The xylylenediamine (b-2) is preferably m-xylylenediamine, p-xylylenediamine, or a mixture thereof, and more preferably m-xylylenediamine or a mixture of m-xylylenediamine and p-xylylenediamine. The xylylenediamine (b-2) is still more preferably m-xylylenediamine in the first multilayer structure, and it is still more preferably a mixture of m-xylylenediamine and p-xylylenediamine in the second multilayer structure.

In the case where the xylylenediamine (b-2) is derived from m-xylylenediamine, the resulting polyether polyamide is excellent in terms of flexibility, crystallinity, melt moldability, molding processability, and toughness.

In the case where the xylylenediamine (b-2) is derived from a mixture of m-xylylenediamine and p-xylylenediamine, the resulting polyether polyamide is excellent in terms of flexibility, crystallinity, melt moldability, molding processability, and toughness and furthermore, exhibits high heat resistance and a high elastic modulus.

In the case of using a mixture of m-xylylenediamine and p-xylylenediamine as the xylylenediamine (b-2), a proportion of p-xylylenediamine is preferably 90% by mole or less, more preferably 80% by mole or less, still more preferably 70% by mole or less, and yet still more preferably 5 to 70% by mole relative to a total amount of m-xylylenediamine and p-xylylenediamine. So long as the proportion of p-xylylenediamine falls within the foregoing range, a melting point of the resulting polyether polyamide is not close to a decomposition temperature of the polyether polyamide, and hence, such is preferred.

In the first multilayer structure, a proportion of the constituent unit derived from the polyether diamine compound (b-1) in the diamine constituent unit of the polyether polyamide (b) is preferably 1 to 50% by mole, more preferably 1 to 30% by mole, still more preferably 1 to 25% by mole, and yet still more preferably 1 to 8% by mole. In the first multilayer structure, so long as the proportion of the constituent unit derived from the polyether diamine compound (b-1) in the diamine constituent unit of the polyether polyamide (b) falls within the foregoing range, the resulting first multilayer structure is excellent in terms of flexibility, gas barrier properties, pinhole resistance, and interlaminar adhesion strength.

In addition, in the second multilayer structure, a proportion of the constituent unit derived from the polyether diamine compound (b-1) in the diamine constituent unit of the polyether polyamide (b) is preferably 1 to 50% by mole, more preferably 3 to 30% by mole, and still more preferably 5 to 25% by mole. In the second multilayer structure, so

long as the proportion of the constituent unit derived from the polyether diamine compound (b-1) in the diamine constituent unit of the polyether polyamide (b) falls within the foregoing range, the resulting polyether polyamide resin is excellent in terms of flexibility, and fuel barrier properties.

<Other diamine compounds>

As described above, though the diamine constituent unit that constitutes the polyether polyamide (b) includes the constituent units derived from the polyether diamine compound (b-1) represented by the foregoing general formula (1) and the xylylenediamine (b-2), it may include a constituent unit derived from other diamine compound so long as the effects of the present invention are not hindered.

As the diamine compound which may constitute a diamine constituent unit other than the polyether diamine compound (b-1) and the xylylenediamine (b-2), there can be exemplified aliphatic diamines, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, 2,4,4-trimethylhexamethylenediamine, etc.; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, bis(aminomethyl)tricyclodecane, etc.; diamines having an aromatic ring, such as bis(4-aminophenyl) ether, p-phenylenediamine, bis(aminomethyl)naphthalene, etc.; and the like. However, it should not be construed that the diamine compound is limited to these compounds.

(Dicarboxylic acid constituent unit)

The dicarboxylic acid constituent unit that constitutes the polyether polyamide (b) includes a constituent unit derived from an α,ω-linear aliphatic dicarboxylic acid (b-3) having from 4 to 20 carbon atoms.

A content of the constituent unit derived from an α,ω-linear aliphatic dicarboxylic acid (b-3) having from 4 to 20 carbon atoms in the above-described dicarboxylic acid constituent unit is preferably 50 to 100% by mole, and more preferably 70 to 100% by mole.

As the α,ω-linear aliphatic dicarboxylic acid (b-3) having from 4 to 20 carbon atoms, there can be exemplified succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, and the like. Of these, at least one selected from the group consisting of adipic acid and sebacic acid is preferred from the viewpoints of crystallinity and high elasticity. In addition, in the first multilayer structure, adipic acid is more preferred from the viewpoint of gas barrier properties in addition to the crystallinity and high elasticity, and in the second multilayer structure, sebacic acid is more preferred from the viewpoint of flexibility in addition to the crystallinity and high elasticity. These dicarboxylic acids may be used solely or in combination of two or more kinds thereof.

<Other dicarboxylic acids>

As described above, though the dicarboxylic acid constituent unit that constitutes the polyethylene polyamide (b) includes the constituent unit derived from the α,ω-linear aliphatic dicarboxylic acid (b-3) having from 4 to 20 carbon atoms, it may also include a constituent unit derived from other dicarboxylic acid so long as the effects of the present invention are not hindered.

As the dicarboxylic acid which may constitute the dicarboxylic acid constituent unit other than the α,ω-linear aliphatic dicarboxylic acid (b-3) having from 4 to 20 carbon atoms, there can be exemplified aliphatic dicarboxylic acids, such as oxalic acid, malonic acid, etc.; aromatic dicarboxylic acids, such as terephthalic acid, isophthalic acid, 2,6-naphthalenedicarboxylic acid, etc.; and the like. However, it should not be construed that the dicarboxylic acid is limited thereto.

In the case of using a mixture of the α,ω-linear aliphatic dicarboxylic acid (b-3) having from 4 to 20 carbon atoms and isophthalic acid as the dicarboxylic acid component, the heat resistance and molding processability of the polyether polyamide (b) can be enhanced. A molar ratio of the α,ω-linear aliphatic dicarboxylic acid (b-3) having from 4 to 20 carbon atoms and isophthalic acid ((α,ω-linear aliphatic dicarboxylic acid (b-3) having from 4 to 20 carbon atoms)/(isophthalic acid)) is preferably from 50/50 to 99/1, and more preferably from 70/30 to 95/5.

(Physical properties of polyether polyamide (b))

When the polyether polyamide (b) contains, as a hard segment, a highly crystalline polyamide block formed of the xylylenediamine (b-2) and the α,ω-linear aliphatic dicarboxylic acid (b-3) having from 4 to 20 carbon atoms and, as a soft segment, a polyether block derived from the polyether diamine compound (b-1), excellent melt moldability and

molding processability are revealed. Furthermore, the resulting polyether polyamide is excellent in terms of toughness, flexibility, crystallinity, heat resistance, gas barrier properties, pinhole resistance, interlaminar adhesion strength, and the like.

A relative viscosity of the polyether polyamide (b) is preferably in the range of 1.1 to 3.0, more preferably in the range of 1.1 to 2.9, and still more preferably in the range of 1.1 to 2.8 from the viewpoints of moldability and melt mixing properties with other resins. The relative viscosity is a ratio of a fall time (t) obtained by dissolving 0.2 g of a sample in 20 mL of 96% sulfuric acid and measuring the solution at 25°C by a Cannon-Fenske viscometer to a fall time (to) of the 96% sulfuric acid itself as similarly measured and is expressed according to the following equation.

$$\text{Relative viscosity} = t/t_0$$

A melting point of the polyether polyamide (b) is preferably in the range of 170 to 270°C, more preferably in the range of 175 to 270°C, still more preferably in the range of 180 to 270°C, and yet still more preferably in the range of 180 to 260°C from the viewpoint of heat resistance. The melting point is measured by using a differential scanning calorimeter.

A rate of tensile elongation at break of the polyether polyamide (b) (measurement temperature: 23°C, humidity: 50% RH) is preferably 100% or more, more preferably 200% or more, still more preferably 250% or more, and yet still more preferably 300% or more from the viewpoint of flexibility.

A tensile elastic modulus of the polyether polyamide (b) (measurement temperature: 23°C, humidity: 50% RH) is preferably 100 MPa or more, more preferably 200 MPa or more, still more preferably 300 MPa or more, yet still more preferably 400 MPa or more, and even yet still more preferably 500 MPa or more from the viewpoints of flexibility and mechanical strength.

The tensile elastic modulus and the rate of tensile elongation at break are measured in conformity with JIS K7161.

A number average molecular weight (Mn) of the polyether polyamide (b) is preferably 1,000 to 50,000, more preferably 3,000 to 30,000, still more preferably 5,000 to 25,000, and yet still more preferably 7,000 to 22,000.

Incidentally, the number average molecular weight (Mn) of the polyether polyamide (b) means a value measured by a method described in the Examples.

(Production of polyether polyamide (b))

The production of the polyether polyamide (b) is not particularly limited but can be carried out by an arbitrary method under an arbitrary polymerization condition. The polyether polyamide (b) can be, for example, produced by a method in which a salt composed of the diamine component (the diamine including the polyether diamine compound (b-1) and the xylylenediamine (b-2), and the like) and the dicarboxylic acid component (the dicarboxylic acid including the α,ω-linear aliphatic dicarboxylic acid (b-3) having from 4 to 20 carbon atoms and the like) is subjected to temperature rise in a pressurized state in the presence of water, and polymerization is carried out in a molten state while removing the added water and condensed water. In addition, the polyether polyamide (b) can also be produced by a method in which the diamine component (the diamine including the polyether diamine compound (b-1) and the xylylenediamine (b-2), and the like) is added directly to the dicarboxylic acid component (the dicarboxylic acid including the α,ω-linear aliphatic dicarboxylic acid (b-3) having from 4 to 20 carbon atoms and the like) in a molten state, and polycondensation is carried out at atmospheric pressure. In this case, in order to keep the reaction system in a uniform liquid state, the diamine component is continuously added to the dicarboxylic acid component, and during that period, the polycondensation is advanced while subjecting the reaction system to temperature rise such that the reaction temperature does not fall below the melting point of each of the formed oligoamide and polyamide.

On that occasion, among the diamine components, the polyether diamine compound (b-1) may be previously charged together with the dicarboxylic acid component in a reaction tank. By previously charging the polyether diamine compound (b-1) in a reaction tank, thermal deterioration of the polyether diamine compound (b-1) can be suppressed. In that case, in order to keep the reaction system in a uniform liquid state, the diamine component other than the polyether diamine compound (b-1) is continuously added to the dicarboxylic acid component, too, and during that period, the polycondensation is advanced while subjecting the reaction system to temperature rise such that the reaction temperature does not fall below the melting point of each of the formed oligoamide and polyamide.

A molar ratio of the diamine component (the diamine including the polyether diamine compound (b-1) and the xylylenediamine (b-2), and the like) and the dicarboxylic acid component (the dicarboxylic acid including the α,ω-linear aliphatic dicarboxylic acid (b-3) having from 4 to 20 carbon atoms and the like) ((diamine component)/(dicarboxylic acid component)) is preferably in the range of 0.9 to 1.1, more preferably in the range of 0.93 to 1.07, still more preferably in the range of 0.95 to 1.05, and yet still more preferably in the range of 0.97 to 1.02. So long as the molar ratio falls

within the foregoing range, an increase of the molecular weight is easily advanced.

A polymerization temperature is preferably from 150 to 300°C, more preferably from 160 to 280°C, and still more preferably from 170 to 270°C. So long as the polymerization temperature falls within the foregoing temperature range, the polymerization reaction is rapidly advanced. In addition, since the monomers and the oligomer or polymer, etc. on the way of the polymerization hardly cause thermal decomposition, properties of the resulting polyether polyamide become favorable.

A polymerization time is usually from 1 to 5 hours after starting to add dropwise the diamine component. By allowing the polymerization time to fall within the foregoing range, the molecular weight of the polyether polyamide (b) can be sufficiently increased, and furthermore, coloration of the resulting polyether polyamide can be suppressed.

It is preferred that the polyether polyamide (b) is produced by a melt polycondensation (melt polymerization) method by the addition of a phosphorus atom-containing compound. As the melt polycondensation method, a method in which the diamine component is added dropwise to the molten dicarboxylic acid component at atmospheric pressure, and polymerization is carried out in a molten state while removing the condensed water is preferred.

A phosphorus atom-containing compound can be added in the polycondensation system of the polyether polyamide (b) within the range where its properties are not hindered. Examples of the phosphorus atom-containing compound which can be added include dimethylphosphinic acid, phenylmethylphosphinic acid, hypophosphorous acid, sodium hypophosphite, potassium hypophosphite, lithium hypophosphite, calcium hypophosphite, ethyl hypophosphite, phenylphosphonous acid, sodium phenylphosphonoate, potassium phenylphosphonoate, lithium phenylphosphonoate, ethyl phenylphosphonoate, phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogen phosphite, sodium phosphite, triethyl phosphite, triphenyl phosphite, pyrrophosphorous acid, and the like. Of these, hypophosphorous acid metal salts, such as sodium hypophosphite, potassium hypophosphite, lithium hypophosphite, etc., are preferred, with sodium hypophosphite being more preferred, from the viewpoint that they are high in terms of an effect for promoting the amidation reaction and also excellent in terms of a coloration preventing effect. The phosphorus atom-containing compound which can be used in the present invention is not limited to these compounds.

An addition amount of the phosphorus atom-containing compound which is added in the polycondensation system is preferably from 1 to 1,000 ppm, more preferably from 5 to 1,000 ppm, and still more preferably from 10 to 1,000 ppm as converted into a phosphorus atom concentration in the polyether polyamide (b) from the viewpoints of favorable appearance and molding processability.

In addition, it is preferred to add an alkali metal compound in combination with the phosphorus atom-containing compound in the polycondensation system of the polyether polyamide (b). In order to prevent the coloration of the polymer during the polycondensation, it is necessary to allow a sufficient amount of the phosphorus atom-containing compound to exist; however, under certain circumstances, there is a concern that gelation of the polymer is caused. Therefore, in order to also adjust an amidation reaction rate, it is preferred to allow an alkali metal compound to coexist. The alkali metal compound is preferably an alkali metal hydroxide or an alkali metal acetate. Examples of the alkali metal compound which can be used in the present invention include lithium hydroxide, sodium hydroxide, potassium hydroxide, rubidium hydroxide, cesium hydroxide, lithium acetate, sodium acetate, potassium acetate, rubidium acetate, cesium acetate, and the like; however, the alkali metal compound can be used without being limited to these compounds. In the case of adding the alkali metal compound in the polycondensation system, a value obtained by dividing the molar number of the compound by the molar number of the phosphorus atom-containing compound is preferably from 0.5 to 1, more preferably from 0.55 to 0.95, and still more preferably from 0.6 to 0.9. When the subject value falls within the foregoing range, an effect for appropriately suppressing the promotion of the amidation reaction attributable to the phosphorus atom-containing compound is brought, and the occurrence of the matter that the polycondensation reaction rate is lowered due to excessive suppression of the reaction, so that thermal history of the polymer increases, thereby causing an increase of gelation of the polymer, can be avoided.

The polyether polyamide (b) obtained by melt polycondensation is once taken out from the polymerization system, pelletized, and then dried for use. In addition, for the purpose of further increasing the degree of polymerization of the polyether polyamide (b), solid phase polymerization of the polyether polyamide (b) may also be carried out. As a heating apparatus which is used for drying or solid phase polymerization, a continuous-type heat drying apparatus, a rotary drum type heating apparatus called a tumble dryer, a conical dryer, a rotary dryer, or the like, or a cone type heating apparatus equipped with a rotary blade in the inside thereof, called a Nauta mixer, can be suitably used; but the method and the apparatus are not limited to these, and known methods and known apparatuses can be used.

[Polyolefin layer (C)]

The second multilayer structure of the present invention has at least a polyolefin layer (C) as a configuration layer.

The polyolefin layer (C) is a layer containing a polyolefin resin as a main component. As the polyolefin resin,

for example, polyethylene, polypropylene, and the like can be used, and these resins may be either a homopolymer or a copolymer. Of the polyolefin resins, polyethylene is preferred from the standpoint that it has flexibility, weather resistance, and chlorine resistance.

As the polyethylene, low density polyethylene (LDPE), linear low density polyethylene (LLDPE), very low density polyethylene (VLDPE), medium density polyethylene (MDPE), high density polyethylene (HDPE), and the like can be used.

In addition, as the copolymer, a copolymer of ethylene or propylene with a monomer capable of copolymerizing therewith can be used. Examples of the monomer capable of copolymerizing with ethylene or propylene include α-olefins, styrenes, dienes, cyclic compounds, oxygen atom-containing compounds, and the like.

Examples of the above-described α-olefin include 1-butene, 3-methyl-1-butene, 3-methyl-1-pentene, 4-methyl-1-pentene, 1-pentene, 1-hexene, 1-heptene, 1-octene, 1-decene, 1-tetradecene, 1-hexadecene, 1-octadecene, 1-eicosene, and the like. Examples of the above-described styrene include styrene, 4-methylstyrene, 4-dimethylaminostyrene, and the like. Examples of the above-described diene include 1,4-butadiene, 1,5-hexadiene, 1,4-hexadiene, 1,7-octadiene, and the like. Examples of the above-described cyclic compound include norbornene, cyclopentene, and the like. Examples of the oxygen atom-containing compound include hexanol, hexenoic acid, methyl octanoate, and the like. These monomers capable of copolymerizing with ethylene or propylene may be used solely or in combination of two or more kinds thereof. In addition, the copolymer may also be a copolymer and ethylene and propylene.

The copolymer may be any of an alternate copolymer, a random copolymer, or a block copolymer.

In addition, the polyolefin resin may also include a modified polyolefin resin which is modified with a small amount of a carboxyl group-containing monomer, such as acrylic acid, maleic acid, methacrylic acid, maleic anhydride, fumaric acid, itaconic acid, etc. The modification is usually achieved through copolymerization or graft modification.

[Layer configuration and molding method]

(First multilayer structure)

The first multilayer structure of the present invention can have one or two or more of each of the polyamide layer (A) (hereinafter sometimes abbreviated as "layer (A)") and the polyether polyamide layer (B) (hereinafter sometimes abbreviated as "layer (B)"). Specifically, the following layer configurations are exemplified, and a layer configuration prepared through coextrusion from a multilayer die by using an extruder is preferred.

(1) Two-type two-layer configuration; specifically, layer (A)/layer (B), layer (B)/layer (A), etc.
(2) Two-type three-layer configuration; specifically, layer (A)/layer (B)/layer (A), layer (B)/layer (A)/layer (B), etc.
(3) Two-type four-layer configuration; specifically, layer (A)/layer (B)/layer (A)/layer (B), layer (B)/layer (A)/layer (B)/layer (A), etc.

Incidentally, in this specification, for example, the expression of X/Y/Z means that X, Y, and Z are laminated in this order from the side exposed to oxygen unless otherwise indicated. In addition, in the case where the multilayer structure has a plurality of the layers (A), the plural layers (A) may be the same as or different from each other. The same is also applicable to the layer (B).

In addition, in the case where the first multilayer structure of the present invention is applied as a food packaging material, it is preferred that the first multilayer structure has at least a layer configuration having the layer (B), the layer (A), and the layer (B) in this order, in which the layer (B) is laminated on the both surfaces of the layer (A), from the standpoints of pinhole resistance and oxygen barrier properties.

A total thickness of the first multilayer structure of the present invention may be properly specified according to an application. In the case where the first multilayer structure is applied as a film of a food packaging material, the total thickness is preferably 3 to 500 μm, more preferably 3 to 300 μm, and still more preferably 5 to 100 μm from the standpoints of pinhole resistance, oxygen barrier properties, and interlaminar adhesion strength.

In addition, as described above, in the case where the first multilayer structure of the present invention is applied as a film of a food packaging material, a thickness of the layer (A) is preferably 1 to 200 μm, more preferably 1 to 100 μm, and still more preferably 3 to 50 μm. So long as the thickness of the layer (A) is 1 μm or more, sufficient oxygen barrier properties can be exhibited, and so long as it is 200 μm or less, a film excellent in terms of a balance between oxygen barrier properties and pinhole resistance can be formed.

In addition, as described above, in the case where the first multilayer structure of the present invention is applied as a film of a food packaging material, a thickness of the layer (B) is preferably 1 to 499 μm, more preferably 1 to 300 μm, and still more preferably 2 to 100 μm. So long as the thickness of the layer (B) is 1 μm or more, sufficient oxygen barrier properties and pinhole resistance can be exhibited, and so long as it is 499 μm or less, in forming a film, excellent moldability is revealed.

Furthermore, a proportion of the thickness of the layer (B) to the thickness of the layer (A) is preferably 0.01 to 100, more preferably 0.1 to 30, and still more preferably 1 to 10. So long as the proportion of the thickness of the layer (B) to the thickness of the layer (A) is 0.01 or more, a film excellent in terms of a balance between oxygen barrier properties and pinhole resistance and having excellent interlaminar adhesion strength can be formed, and so long as it is 100 or less, in forming a film, excellent moldability is revealed.

The first multilayer structure is not particularly limited in terms of a molding method thereof but can be produced by adopting a known technology. For example, the respective resins are melt kneaded for every resin constituting each layer, and the respective molten resins are laminated and extruded from a die capable of molding into a multilayer structure, thereby preparing an unstretched multilayer structure. This unstretched multilayer structure is subjected to simultaneous biaxial stretching or sequential biaxial stretching so as to form a molded body having a desired size, whereby the first multilayer structure can be produced. Furthermore, in order to give dimensional stability, a heat treatment may be carried out at about 200°C.

In the first multilayer structure of the present invention, in addition to the polyamide layer (A) and the polyether polyamide layer (B) as described above, an extrusion moldable resin layer can be provided for the purpose of giving properties according to the need without hindering the effects of the present invention.

Examples of the above-described resin layer include those formed of a thermoplastic resin, such as a polyolefin resin, a maleic anhydride-modified polyolefin resin, a fluorine resin, a polyimide resin, a polyamide resin, a polyester resin, a polystyrene resin, a vinyl chloride resin, etc.

The polyamide layer (A) and the polyether polyamide layer (B) as described above, each constituting the first multilayer structure of the present invention, and the above-described resin layer which can be provided as the need arises may contain an additive within the range where the effects of the present invention are not hindered.

Examples of the additive include a filler, a stabilizer, a colorant, an ultraviolet absorber, a photostabilizer, an antioxidant, an antistatic agent, a flame retarder, a crystallization accelerator, a fibrous reinforcing agent, a plasticizer, a lubricant, a heat-resistant agent, and the like. However, it should not be construed that the additive is limited thereto. In addition, as for a content of the additive, the additive may be used within the range of a usual content according to the type thereof.

In the first multilayer structure, in the case of laminating in the configuration of layer (B)/layer (A)/layer (B), the type and amount of the additive to be added in each layer of the layer (B), the layer (A), and the layer (B) may be different from each other.

The first multilayer structure of the present invention has the polyamide layer (A) and the polyether polyamide layer (B) as described above and has excellent properties in terms of pinhole resistance, oxygen barrier properties, and interlaminar adhesion strength. For that reason, the above-described multilayer structure is suitable as a sheet and a film, each of which is used as a food packaging material, such as a pouch, a drawn container, a casing, a pillow package, etc.

(Second multilayer structure)

The second multilayer structure of the present invention can have one or two or more of each of the polyolefin layer (C) (hereinafter sometimes abbreviated as "layer (C)") and the polyether polyamide layer (B). Specifically, the following layer configurations are exemplified, and a layer configuration prepared through coextrusion from a multilayer die by using an extruder is preferred.

(1) Two-type two-layer configuration; specifically, layer (C)/layer (B), layer (B)/layer (C), etc.
(2) Two-type three-layer configuration; specifically, layer (C)/layer (B)/layer (C), layer (B)/layer (C)/layer (B), etc.
(3) Two-type four-layer configuration; specifically, layer (C)/layer (B)/layer (C)/layer (B), layer (B)/layer (C)/layer (B)/layer (C), etc.

Incidentally, in this specification, in the case where the second multilayer structure is a cylindrical molded body, for example, the expression of X/Y/Z means that X, Y, and Z are laminated in this order from the inside unless otherwise indicated. In addition, in the case where the second multilayer structure has a plurality of the layers (C), the plural layers (C) may be the same as or different from each other. The same is also applicable to the layer (B).

In addition, the second multilayer structure of the present invention is preferably a cylindrical molded body in view of its properties. The cylindrical molded body is one having a cylindrical shape, for example, a pipe, a hose, a tube, etc., and having a cavity in the inside thereof, in which a liquid or a gas can be moved from one side to the other side in the cavity part.

In the case where the second multilayer structure is a cylindrical molded body, it is preferred that the second multilayer structure has at least a layer configuration of the layer (C) and the layer (B) in this order from the cavity part, namely the inside of the cylindrical molded body from the standpoints of fuel barrier properties, weather resistance,

chlorine resistance, and the like.

As for the layer configuration, a preferred embodiment may be chosen according to an application of the cylindrical molded body; however, the two-type two-layer configuration of layer (C)/layer (B) and the two-type three-layer configuration of layer (C)/layer (B)/layer (C) from the inside are more preferred from the viewpoints of a balance between flexibility and fuel barrier properties as well as economy.

A thickness of the cylindrical molded body may be properly specified according to an application.

A thickness of the polyether polyamide layer (B) is preferably 10 μm or more, more preferably 30 μm or more, and still more preferably 50 μm or more. So long as the thickness of the polyether polyamide layer (B) is 10 μm or more, the effect of fuel barrier properties is suitably exhibited.

In addition, a proportion of the thickness of the polyether polyamide layer (B) to the thickness of the cylindrical molded body is preferably 0.005 to 0.5, preferably 0.008 to 0.2, and still more preferably 0.01 to 0.1. So long as the proportion of the thickness of the polyether polyamide layer (B) to the thickness of the cylindrical molded body is 0.005 or more, sufficient fuel barrier properties can be exhibited, and so long as it is 0.5 or less, a balance between flexibility and fuel barrier properties is excellent, and in forming a cylindrical molded body, excellent moldability is revealed.

The cylindrical molded body is not particularly limited in terms of a molding method thereof but can be produced by adopting a known technology. For example, the cylindrical molded body may be produced by melt kneading the respective resins for every resin constituting each layer and feeding the respective molten resins into a multilayer tube extrusion molding machine equipped with a die capable of molding in a multilayer structure, followed by molding according to the customary method. In addition, the multilayer structure may be produced in such a manner that after previously molding an internal layer composed of the polyolefin layer (C) in a prescribed shape, the polyether polyamide (b) melted from a cross-head die or the like is coated to provide the polyether polyamide layer (B), thereby forming a configuration of layer (C)/layer (B) from the inside. Furthermore, the polyolefin layer (C) may be further coated on this multilayer structure, thereby forming a multilayer structure of layer (C)/layer (B)/layer (C) from the inside.

In melt kneading the polyolefin resin that is a main component of the polyolefin layer (C) and extrusion molding the polyolefin layer (C), it is preferred to set its extrusion temperature to a range of a melting point of the polyolefin resin as a main component or higher to a temperature that is higher by 150°C than the melting point of the polyolefin resin as a main component or lower; and it is more preferred to set the extrusion temperature to a temperature that is higher by 20°C than the melting point of the polyolefin resin as a main component or higher to a temperature that is higher by 120°C than the melting point of the polyolefin resin as a main component or lower. By setting the extrusion temperature to the melting point of the polyolefin resin or higher, solidification of the polyolefin resin can be suppressed, and by setting the extrusion temperature to a temperature that is higher by 150°C than the melting point of the polyolefin resin or lower, thermal deterioration of the polyolefin resin can be suppressed.

In melt kneading the polyether polyamide (b) that is a main component of the polyether polyamide layer (B) and extrusion molding the polyether polyamide layer (B), it is preferred to set its extrusion temperature to a range of a melting point of the polyether polyamide (b) as a main component or higher to a temperature that is higher by 80°C than the melting point of the polyether polyamide (b) as a main component or lower; and it is more preferred to set the extrusion temperature to a range of a temperature that is higher by 10°C than the melting point of the polyether polyamide (b) as a main component or higher to a temperature that is higher by 60°C than the melting point of the polyether polyamide (b) as a main component or lower. By setting the extrusion temperature to the melting point of the polyether polyamide (b) or higher, solidification of the polyether polyamide (b) can be suppressed, and by setting the extrusion temperature to a range of a temperature that is higher by 80°C than the melting point of the polyether polyamide (b) or lower, thermal deterioration of the polyether polyamide (b) can be suppressed.

In the case of laminating the polyolefin layer (C) and the polyether polyamide layer (B) within a multilayer tube extrusion molding machine, it is preferred to set a temperature of the resin flow channel after lamination to a range of a melting point of the polyether polyamide (b) or higher to a temperature that is higher by 80°C than the melting point of the polyether polyamide (b) as a main component or lower; and it is more preferred to set a temperature of the resin flow channel after lamination to a range of a temperature that is higher by 10°C than the melting point of the polyether polyamide (b) as a main component or higher to a temperature that is higher by 60°C than the melting point of the polyether polyamide (b) as a main component or lower. By setting the temperature of the resin flow channel after lamination to the melting point of the polyether polyamide (b) or higher, solidification of the polyether polyamide (b) can be suppressed, and by setting the temperature of the resin flow channel after lamination to a range of a temperature that is higher by 80°C than the melting point of the polyether polyamide (b) or lower, thermal deterioration of the polyether polyamide (b) can be suppressed.

In addition, the multilayer structure of the present invention, in addition to the polyolefin layer (C) and the polyether polyamide layer (B) as described above, an extrusion moldable resin layer can be provided for the purpose of giving properties according to the need without hindering the effects of the present invention.

Examples of the above-described resin layer include those formed of a thermoplastic resin, such as a maleic anhydride-modified polyolefin resin, a fluorine resin, a polyimide resin, a polyamide resin, a polyester resin, a polystyrene

resin, a vinyl chloride resin, etc.

In addition, the polyolefin layer (C) and the polyether polyamide layer (B) as described above, each constituting the multilayer structure of the present invention, and the above-described resin layer which can be provided as the need arises may contain an additive within the range where the effects of the present invention are not hindered.

Examples of the additive include a filler, a stabilizer, a colorant, an ultraviolet absorber, a photostabilizer, an antioxidant, an antistatic agent, a flame retarder, a crystallization accelerator, a fibrous reinforcing agent, a plasticizer, a lubricant, a heat-resistant agent, and the like. However, it should not be construed that the additive is limited thereto. In addition, as for a content of the additive, the additive may be used within the range of a usual content according to the type thereof.

In the case of laminating in the configuration of layer (C)/layer (B)/layer (C) from the inside, the type and amount of the additive to be added in the layer (C) in the inside, the layer (B) in the middle, and the layer (C) in the outside may be different from each other. For example, by changing a combination of the colorant in the layer (C) in the inside with that in the layer (C) in the outside, it is also possible to make a distinction from other resin tube easy.

The second multilayer structure of the present invention has the polyolefin layer (C) and the polyether polyamide layer (B) as described above and has excellent properties in terms of flexibility and fuel barrier properties without hindering light weight and excellent flexibility as in polyolefin-made products. For that reason, even if the above-described second multilayer structure is wound around a winding core and conveyed, it does not cause a defective appearance, such as creases, etc., and is convenient for a piping work to be carried out upon bending in a desired way. In addition, the second multilayer structure of the present invention is suitable for water service piping not requiring a covering material for preventing a fuel, such as kerosene, etc., from penetration, especially for water service piping for water supply.

## Examples

The present invention is more specifically described below by reference to the Examples, but it should not be construed that the present invention is limited thereto. Incidentally, in the Examples and Comparative Examples, various evaluations were carried out by the following methods.

### (1) Oxygen barrier properties (oxygen transmission amount)

An oxygen transmission amount (unit: cc/m$^2$·atm·day) of a fabricated stretched film having a total thickness of 25 μm was measured by using OXTRAN (registered trademark) 2/21 (manufactured by MOCON) under a condition at 23°C and 60% RH in conformity with JIS K7126.

### (2) Pinhole resistance (number of pinholes)

A fabricated stretched film having a total thickness of 25 μm was cut into a size of 210 mm square, and by using a Gelvo type flex-cracking tester (manufactured by Rigaku Kogyo K.K.), the stretched film was bent in an environment at 23°C and 60% RH while setting the axis direction of the Gelvo type flex-cracking tester as the measuring direction, thereby measuring the number of pinholes at the time of bending of 1,000 times. The measurement of pinholes was carried out by using a pinhole tester (slight current discharge method).

### (3) Interlaminar adhesion strength (presence or absence of interlaminar delamination)

The layer (B) was cut into 100 crosscuts at intervals of 2 mm by using a cutter in conformity with JIS K5600-5-6 (ISO 2409), and CELLOTAPE (registered trademark, manufactured by Nichiban Co., Ltd.) was stuck onto the cut portion and surely separated therefrom for 0.5 to 1.0 second at an angle close to 60° within 5 minutes, thereby confirming the delamination state of the layer (B).

The case where even one crosscut delaminated among the above-described 100 crosscuts was evaluated such that the delamination occurred.

### (4) Evaluation of flexibility

Each of cylindrical molded bodies obtained in the Examples and Comparative Examples was wound around a winding core having a diameter of 600 mm and allowed to stand at 23°C for 24 hours. Thereafter, the cylindrical molded body was taken out from the winding core, and whether or not creases were generated was evaluated through visual inspection.

(5) Evaluation of petroleum smell (fuel barrier properties)

Each of cylindrical molded bodies obtained in the Examples and Comparative Examples was wound around a winding core having a diameter of 600 mm, fixed within a kerosene-filled container such that its semicircle was dipped in the kerosene, and then allowed to stand at 23°C for one week. Thereafter, tap water was charged within the cylindrical molded body in a state where it was dipped in kerosene, after allowing to further stand for 24 hours, the tap water was discharged, and the discharged tap water was evaluated with respect to any smell of the kerosene.
In addition, various measurements in the Production Examples were carried out by the following methods.

(1) Relative viscosity (ηr)

0.2 g of a sample was accurately weighed and dissolved in 20 mL of 96% sulfuric acid at 20 to 30°C with stirring to achieve complete dissolution, thereby preparing a solution. Thereafter, 5 mL of the solution was rapidly taken into a Cannon-Fenske viscometer, allowed to stand in a thermostat at 25°C for 10 minutes, and then measured for a fall time (t). In addition, a fall time (to) of the 96% by mass sulfuric acid itself was similarly measured. A relative viscosity was calculated from t and to according to the following equation.

$$\text{Relative viscosity} = t/t_0$$

(2) Number average molecular weight (Mn)

First of all, a sample was dissolved in a mixed solvent of phenol and ethanol (phenol/ethanol = 4/1 (volume ratio)) and a benzyl alcohol solvent, respectively, and a terminal carboxyl group concentration and a terminal amino group concentration were determined by means of neutralization titration with hydrochloric acid and a sodium hydroxide aqueous solution, respectively. A number average molecular weight was determined from quantitative values of the terminal amino group concentration and the terminal carboxyl group concentration according to the following equation.

$$\text{Number average molecular weight} = 2 \times 1{,}000{,}000/([NH_2] + [COOH])$$

$[NH_2]$: Terminal amino group concentration (μeq/g)

[COOH]: Terminal carboxyl group concentration (μeq/g)

(3) Differential scanning calorimetry (glass transition temperature, crystallization temperature, and melting point)

The measurement of the differential scanning calorimetry was carried out in conformity with JIS K7121 and K7122. By using a differential scanning calorimeter (a trade name: "DSC-60", manufactured by Shimadzu Corporation), each sample was charged in a DSC measurement pan and subjected to a pretreatment of raising the temperature to 300°C in a nitrogen atmosphere at a temperature rise rate of 10°C/min and rapid cooling, followed by performing the measurement. As for the measurement condition, the temperature was raised at a rate of 10°C/min, and after keeping at 300°C for 5 minutes, the temperature was dropped to 100°C at a rate of -5°C/min, thereby determining a glass transition temperature Tg, a crystallization temperature Tch, and a melting point Tm.

[Production of polyether amide]

As the polyether amide for forming the polyether polyamide layer (B) in the Examples, those produced in the following Production Examples were used.

(Production Example 1) Production of polyether polyamide b1

In a reaction vessel having a capacity of about 3 L and equipped with a stirrer, a nitrogen gas inlet, and a condensed water discharge port, 650.37 g of adipic acid, 0.6125 g of sodium hypophosphite monohydrate, and 0.4266 g of sodium acetate were charged, and after thoroughly purging the inside of the vessel with nitrogen, the added components were melted at 170°C while feeding a nitrogen gas at a rate of 20 mL/min into the vessel. A mixed liquid of 588.04 g of m-xylylenediamine (MXDA) (manufactured by Mitsubishi Gas Chemical Company, Inc.) and 115.46 g of a

polyether diamine (JEFFAMINE (registered trademark) ED-900, manufactured by Huntsman Corporation, USA; according to the catalog of Huntsman Corporation, USA, in the foregoing general formula (1-2), $-OR^1-$ is $-OCH(CH_3)CH_2-$ or $-OCH_2CH(CH_3)-$, an approximate figure of (x2 + z2) is 6.0, an approximate figure of y2 is 12.5, and an approximate average molecular weight is 900) was added dropwise thereto while gradually raising the temperature of the inside of the vessel to 260°C, and the mixture was polymerized for about 2 hours, thereby obtaining a polyether polyamide. Relative viscosity = 1.62, [COOH] = 49.02 μeq/g, $[NH_2]$ = 95.5 μeq/g, Mn = 13,840, Tg = 68.1°C, Tch = 121.6°C, Tm = 234.1°C.

(Production Example 2) Production of polyether polyamide b2

In a reaction vessel having a capacity of about 3 L and equipped with a stirrer, a nitrogen gas inlet, and a condensed water discharge port, 584.60 g of adipic acid, 0.5933 g of sodium hypophosphite monohydrate, and 0.4133 g of sodium acetate were charged, and after thoroughly purging the inside of the vessel with nitrogen, the added components were melted at 170°C while feeding a nitrogen gas at a rate of 20 mL/min into the vessel. A mixed liquid of 516.52 g of m-xylylenediamine (MXDA) (manufactured by Mitsubishi Gas Chemical Company, Inc.) and 199.60 g of a polyether diamine (JEFFAMINE (registered trademark) XTJ-542, manufactured by Huntsman Corporation, USA; according to the catalog of Huntsman Corporation, USA, in the foregoing general formula (1-1), $-OR^1-$ is $-OCH(CH_3)CH_2-$ or $-OCH_2CH(CH_3)-$, an approximate figure of (x1 + z1) is 6.0, an approximate figure of y1 is 9.0, and an approximate average molecular weight is 1,000) was added dropwise thereto while gradually raising the temperature of the inside of the vessel to 260°C, and the mixture was polymerized for about 2 hours, thereby obtaining a polyether polyamide. Relative viscosity = 1.53, [COOH] = 39.78 μeq/g, $[NH_2]$ = 106.93 μeq/g, Mn = 13,632, Tg = 76.0°C, Tch = 114.7°C, Tm = 234.3°C.

(Production Example 3) Production of polyether polyamide b3

In a reaction vessel having a capacity of about 3 L and equipped with a stirrer, a nitrogen gas inlet, and a condensed water discharge port, 613.83 g of adipic acid, 0.6242 g of sodium hypophosphite monohydrate, and 0.4348 g of sodium acetate were charged, and after thoroughly purging the inside of the vessel with nitrogen, the added components were melted at 170°C while feeding a nitrogen gas at a rate of 20 mL/min into the vessel. A mixed liquid of 380.41 g of m-xylylenediamine (MXDA) (manufactured by Mitsubishi Gas Chemical Company, Inc.) and 163.03 g of p-xylylenediamine (PXDA) (manufactured by Mitsubishi Gas Chemical Company, Inc.) (molar ratio (MXDA/PXDA = 70/30)) and 210.00 g of a polyether diamine (JEFFAMINE (registered trademark) XTJ-542, manufactured by Huntsman Corporation, USA; the details thereof are the same as those described above) was added dropwise thereto while gradually raising the temperature of the inside of the vessel to 260°C, and the mixture was polymerized for about 2 hours, thereby obtaining a polyether polyamide. Relative viscosity = 1.53, [COOH] = 79.95 μeq/g, $[NH_2]$ = 100.38 μeq/g, Mn = 11,091, Tg = 80.5°C, Tch = 113.4°C, Tm = 252.6°C.

(Production Example 4) Production of polyether polyamide b4

In a reaction vessel having a capacity of about 3 L and equipped with a stirrer, a nitrogen gas inlet, and a condensed water discharge port, 584.6 g of adipic acid, 0.683 g of sodium hypophosphite monohydrate, and 0.476 g of sodium acetate were charged, and after thoroughly purging the inside of the vessel with nitrogen, the added components were melted at 170°C while feeding a nitrogen gas at a rate of 20 mL/min into the vessel. A mixed liquid of 490.3 g of m-xylylenediamine (MXDA) (manufactured by Mitsubishi Gas Chemical Company, Inc.) and 400.00 g of a polyether diamine (JEFFAMINE (registered trademark) XTJ-542, manufactured by Huntsman Corporation, USA; the details thereof are the same as those described above) was added dropwise thereto while gradually raising the temperature of the inside of the vessel to 260°C, and the mixture was polymerized for about 2 hours, thereby obtaining a polyether polyamide. Relative viscosity = 1.38, [COOH] = 110.17 μeq/g, $[NH_2]$ = 59.57 μeq/g, Mn = 11,783, Tg = 71.7°C, Tch = 108.3°C, Tm = 232.8°C.

(Production Example 5) Production of polyether polyamide b5

In a reaction vessel having a capacity of about 3 L and equipped with a stirrer, a nitrogen gas inlet, and a condensed water discharge port, 768.55 g of sebacic acid, 0.6644 g of sodium hypophosphite monohydrate, and 0.4628 g of sodium acetate were charged, and after thoroughly purging the inside of the vessel with nitrogen, the added components were melted at 170°C while feeding a nitrogen gas at a rate of 20 mL/min into the vessel. A mixed liquid of 344.18 g of m-xylylenediamine (MXDA) (manufactured by Mitsubishi Gas Chemical Company, Inc.) and 147.50 g of p-xylylenediamine (PXDA) (manufactured by Mitsubishi Gas Chemical Company, Inc.) (molar ratio (MXDA/PXDA = 70/30))

and 171.00 g of a polyether diamine (JEFFAMINE (registered trademark) ED-900, manufactured by Huntsman Corporation, USA; according to the catalog of Huntsman Corporation, USA, in the foregoing general formula (1-2), $-OR^1-$ is $-OCH(CH_3)CH_2-$ or $-OCH_2CH(CH_3)-$, an approximate figure of (x2 + z2) is 6.0, an approximate figure of y2 is 12.5, and an approximate average molecular weight is 900) was added dropwise thereto while gradually raising the temperature of the inside of the vessel to 260°C, and the mixture was polymerized for about 2 hours, thereby obtaining a polyether polyamide b5. Relative viscosity = 1.48, [COOH] = 66.91 μeq/g, [$NH_2$] = 82.80 μeq/g, Mn = 13,360, Tg = 27.6°C, Tch = 72.8°C, Tm = 207.6°C.

(Production Example 6) Production of polyether polyamide b6

In a reaction vessel having a capacity of about 3 L and equipped with a stirrer, a nitrogen gas inlet, and a condensed water discharge port, 687.65 g of sebacic acid, 0.6612 g of sodium hypophosphite monohydrate, and 0.4605 g of sodium acetate were charged, and after thoroughly purging the inside of the vessel with nitrogen, the added components were melted at 170°C while feeding a nitrogen gas at a rate of 20 mL/min into the vessel. A mixed liquid of 291.74 g of m-xylylenediamine (MXDA) (manufactured by Mitsubishi Gas Chemical Company, Inc.) and 125.03 g of p-xylylenediamine (PXDA) (manufactured by Mitsubishi Gas Chemical Company, Inc.) (molar ratio (MXDA/PXDA = 70/30)) and 306.00 g of a polyether diamine (JEFFAMINE (registered trademark) ED-900, manufactured by Huntsman Corporation, USA; the details thereof are the same as those described above) was added dropwise thereto while gradually raising the temperature of the inside of the vessel to 260°C, and the mixture was polymerized for about 2 hours, thereby obtaining a polyether polyamide b6. Relative viscosity = 1.36, [COOH] = 66.35 μeq/g, [$NH_2$] = 74.13 μeq/g, Mn = 14,237, Tg = 16.9°C, Tch = 52.9°C, Tm = 201.9°C.

(Production Example 7) Production of polyether polyamide b7

In a reaction vessel having a capacity of about 3 L and equipped with a stirrer, a nitrogen gas inlet, and a condensed water discharge port, 748.33 g of sebacic acid, 0.6565 g of sodium hypophosphite monohydrate, and 0.4572 g of sodium acetate were charged, and after thoroughly purging the inside of the vessel with nitrogen, the added components were melted at 170°C while feeding a nitrogen gas at a rate of 20 mL/min into the vessel. A mixed liquid of 335.12 g of m-xylylenediamine (MXDA) (manufactured by Mitsubishi Gas Chemical Company, Inc.) and 143.62 g of p-xylylenediamine (PXDA) (manufactured by Mitsubishi Gas Chemical Company, Inc.) (molar ratio (MXDA/PXDA = 70/30)) and 185.00 g of a polyether diamine (JEFFAMINE (registered trademark) XTJ-542, manufactured by Huntsman Corporation, USA; according to the catalog of Huntsman Corporation, USA, in the foregoing general formula (1-1), $-OR^1-$ is $-OCH(CH_3)CH_2-$ or $-OCH_2CH(CH_3)-$, an approximate figure of (x1 + z1) is 6.0, an approximate figure of y1 is 9.0, and an approximate average molecular weight is 1,000) was added dropwise thereto while gradually raising the temperature of the inside of the vessel to 260°C, and the mixture was polymerized for about 2 hours, thereby obtaining a polyether polyamide b7. Relative viscosity = 1.45, [COOH] = 55.19 μeq/g, [$NH_2$] = 70.61 μeq/g, Mn = 15,898, Tg = 50.3°C, Tch = 83.0°C, Tm = 208.1°C.

(Production Example 8) Production of polyether polyamide b8

In a reaction vessel having a capacity of about 3 L and equipped with a stirrer, a nitrogen gas inlet, and a condensed water discharge port, 657.68 g of adipic acid, 0.6626 g of sodium hypophosphite monohydrate, and 0.4578 g of sodium acetate were charged, and after thoroughly purging the inside of the vessel with nitrogen, the added components were melted at 170°C while feeding a nitrogen gas at a rate of 20 mL/min into the vessel. A mixed liquid of 407.58 g of m-xylylenediamine (MXDA) (manufactured by Mitsubishi Gas Chemical Company, Inc.) and 174.68 g of p-xylylenediamine (PXDA) (manufactured by Mitsubishi Gas Chemical Company, Inc.) (molar ratio (MXDA/PXDA = 70/30)) and 202.50 g of a polyether diamine (JEFFAMINE (registered trademark) ED-900, manufactured by Huntsman Corporation, USA; the details thereof are the same as those described above) was added dropwise thereto while gradually raising the temperature of the inside of the vessel to 260°C, and the mixture was polymerized for about 2 hours, thereby obtaining a polyether polyamide b4. Relative viscosity = 1.51, [COOH] = 48.53 μeq/g, [$NH_2$] = 88.72 μeq/g, Mn = 14,572, Tg = 59.5°C, Tch = 98.0°C, Tm = 249.9°C.

In the Comparative Examples, layers formed of polyether amide b9 and polyamide b10 produced in the following Comparative Production Examples were used in place of the polyether polyamide layer (B).

(Comparative Production Example 1) Production of polyether polyamide b9

In a reaction vessel having a capacity of about 3 L and equipped with a stirrer, a nitrogen gas inlet, and a condensed water discharge port, 753.66 g of 12-aminolauric acid (manufactured by Tokyo Chemical Industry Co., Ltd.),

56.84 g of adipic acid, 0.5798 g of sodium hypophosphite monohydrate, and 0.4038 g of sodium acetate were charged, and after thoroughly purging the inside of the vessel with nitrogen, the added components were melted at 170°C while feeding a nitrogen gas at a rate of 20 mL/min into the vessel. 388.89 g of a polyether diamine (JEFFAMINE (registered trademark) XTJ-542, manufactured by Huntsman Corporation, USA; the details thereof are the same as those described above) was added dropwise thereto while gradually raising the temperature of the inside of the vessel to 240°C, and the mixture was polymerized for about 2 hours, thereby obtaining a polyether polyamide b9. Relative viscosity = 1.25, [COOH] = 87.27 μeq/g, [$NH_2$] = 73.12 μeq/g, Mn = 12,470, Tm = 165.0°C.

(Comparative Production Example 2) Production of polyamide b10

In a reaction vessel having a capacity of about 3 L and equipped with a stirrer, a nitrogen gas inlet, and a condensed water discharge port, 829.2 g of sebacic acid, 0.6365 g of sodium hypophosphite monohydrate, and 0.4434 g of sodium acetate were charged, and after thoroughly purging the inside of the vessel with nitrogen, the added components were melted at 170°C while feeding a nitrogen gas at a rate of 20 mL/min into the vessel. A mixed liquid of 390.89 g of m-xylylenediamine (MXDA) (manufactured by Mitsubishi Gas Chemical Company, Inc.) and 167.53 g of p-xylylenediamine (PXDA) (manufactured by Mitsubishi Gas Chemical Company, Inc.) (molar ratio (MXDA/PXDA = 70/30)) was added dropwise thereto while gradually raising the temperature of the inside of the vessel to 260°C, and the mixture was polymerized for about 2 hours, thereby obtaining a polyamide. Relative viscosity = 2.20, [COOH] = 81.8 μeq/g, [$NH_2$] = 26.9 μeq/g, Mn = 18,400, Tg = 65.9°C, Tch = 100.1°C, Tm = 213.8°C.

[Examples 1 to 4]

(Production of first multilayer structure)

Poly-m-xylylene adipamide (a trade name: "MX NYLON S6007", manufactured by Mitsubishi Gas Chemical Company, Inc., relative viscosity: 2.7, melting point: 237°C) for forming the polyamide layer (A) and each of the above-described polyether polyamides b1 to b4 for forming the polyether polyamide layer (B) were used as shown in Table 1, and an unstretched multilayer film having thicknesses of the respective layers of 90/45/90 μm and a total thickness of 225 μm was molded by a multilayer film extrusion molding machine equipped with two extruders and feed blocks for laminating in the order of layer (B)/layer (A)/layer (B).

The above-described unstretched multilayer film was stretched three times in the machine direction and three times in the transverse direction by using a batch-type simultaneous biaxial stretching machine and subjected to a thermal fixing treatment at 210°C, thereby obtaining a stretched multilayer film having thicknesses of the respective layers of 10/5/10 μm and a total thickness of 25 μm.

The resulting multilayer films were subjected to the above-described evaluations. Results are shown in Table 1.

[Comparative Example 1]

A stretched multilayer film was obtained in the same manner as that in Example 1, except that nylon 6 (a trade name: "UBE NYLON 1024B", manufactured by Ube Industries, Ltd.) was used as the layer (B) in place of the polyether polyamide layer (B).

The resulting multilayer film was subjected to the above-described evaluations. Results are shown in Table 1.

Table 1

| | Example | | | | Comparative Example |
|---|---|---|---|---|---|
| | 1 | 2 | 3 | 4 | 1 |
| Polyamide layer (A) | MXD6 | MXD6 | MXD6 | MXD6 | MXD6 |

(continued)

| | | | | Example | | | | Comparative Example |
|---|---|---|---|---|---|---|---|---|
| | | | | 1 | 2 | 3 | 4 | 1 |
| Polyether polyamide layer (B) | | | | b1 | b2 | b3 | b4 | Nylon 6 |
| | Diamine (molar ratio) | (b-1) | XTJ-542 | 0 | 5 | 5 | 10 | |
| | | | ED-900 | 3 | 0 | 0 | 0 | |
| | | (b-2) | Xylylenediamine | 97 | 95 | 95 | 90 | |
| | | | (MXDA/PXDA molar ratio) | (100/0) | (100/0) | (70/30) | (100/0) | |
| | Dicarboxylic acid (molar ratio) | (b-3) | Adipic acid | 100 | 100 | 100 | 100 | |
| Multilayer film | | Layer configuration | | B/A/B | B/A/B | B/A/B | B/A/B | B/A/B |
| | | Thicknesses of respective layers (μm) | | 10/5/10 | 10/5/10 | 10/5/10 | 10/5/10 | 10/5/10 |
| Evaluation | | | | | | | | |
| | Oxygen transmission amount (cc/m$^2$·atm·day) | | | 8.1 | 6.7 | 6.6 | 8.9 | 9.2 |
| | Number of pinholes | | | 0 | 0 | 0 | 0 | 0 |
| | Presence or absence of interlaminar delamination | | | No | No | No | No | Yes |

OMXDA: m-Xylylenediamine
PXDA: p-Xylylenediamine
XTJ-542: Polyether diamine (manufactured by Huntsman Corporation)
ED-900: Polyether diamine (manufactured by Huntsman Corporation)

In Examples 1 to 4, multilayer films free from the generation of pinholes and interlaminar delamination and having excellent oxygen barrier properties were obtained. From this fact, it is noted that by forming a multilayer structure having a polyamide layer and a polyether polyamide layer, a multilayer structure which is excellent in terms of pinhole resistance, oxygen barrier properties, and interlaminar adhesion strength is obtained.

In addition, from the oxygen barrier properties of Comparative Example 1, it is noted that in the case of a multilayer structure with nylon 6, the MXD6 layer is required to have a thickness of a fixed value or more; however, it is noted that according to the multilayer films of Examples 1 to 4, higher oxygen barrier properties are exhibited in the same thickness of the MXD6 layer as that in Comparative Example 1. Furthermore, though in the multilayer film of Comparative Example 1, the interlaminar delamination was generated because an adhesive layer was not provided, it is noted that in the multilayer films of Examples 1 to 4, even when the adhesive layer was not provided, the interlaminar delamination was not generated, and excellent interlaminar adhesion strength was revealed.

[Examples 5 to 8]

(Production of second multilayer structure)

Polyethylene (a trade name: NOVATEC LL UF240, manufactured by Nippon Polyethylene Corp, melting point: 123°C) for forming the polyolefin layer (C) and each of the above-described polyether polyamides b5 to b8 for forming the polyether polyamide layer (B) were used as shown in Table 2, and a cylindrical molded body was molded at a temperature shown in Table 2 by using a multilayer tube extrusion molding machine equipped with two extruders and a channel for forming a two-type three-layer multilayer structure.

This cylindrical molded body had a thickness of 5 mm and a layer configuration of layer (C)/layer (B)/layer (C) from the inside; and the cylindrical molded body was molded so as to have an outer diameter of 30 mm and an inner

diameter of 20 mm, in which a thickness of the layer (B) was 0.2 mm, and the thickness of the layer (C) of the inside and the outside was equal to each other.

The resulting cylindrical molded bodies were subjected to the above-described evaluations. Results are shown in Table 2.

[Comparative Example 2]

Polyethylene (a trade name: NOVATEC LL UF240, manufactured by Nippon Polyethylene Corp, melting point: 123°C) was used, and a cylindrical molded body was molded at a temperature shown in Table 2 by using a single layer tube extrusion molding machine composed of one extruder.

This cylindrical molded body was molded so as to have a thickness of 5 mm, an outer diameter of 30 mm, and an inner diameter of 20 mm. The resulting cylindrical molded body was subjected to the above-described evaluations. Results are shown in Table 2.

[Comparative Examples 3 and 4]

Polyethylene (a trade name: NOVATEC LL UF240, manufactured by Nippon Polyethylene Corp, melting point: 123°C) for forming the polyolefin layer (C) and each of the above-described polyether polyamide b9 and the polyamide b10 (described as the layer (B) in Table 2) for forming an interlayer to be provided in place of the polyether polyamide layer (B) were used as shown in Table 2, and a cylindrical molded body was molded at an extrusion temperature shown in Table 2 by using a multilayer tube extrusion molding machine equipped with two extruders and a channel for forming a two-type three-layer multilayer structure.

This cylindrical molded body had a thickness of 5 mm and a layer configuration of layer (C)/layer (B)/layer (C) from the inside; and the cylindrical molded body was molded so as to have an outer diameter of 30 mm and an inner diameter of 20 mm, in which a thickness of the layer (B) was 0.2 mm, and the thickness of the layer (C) of the inside and the outside was equal to each other.

The resulting cylindrical molded bodies were subjected to the above-described evaluations. Results are shown in Table 2.

Table 2

| | | | | Example | | | | Comparative Example | | |
|---|---|---|---|---|---|---|---|---|---|---|
| | | | | 5 | 6 | 7 | 8 | 2 | 3 | 4 |
| Polyolefin layer (C) | | | | PE | PE | PE | PE | PE | PE | PE |
| Polyether polyamide layer (B) | | | | b5 | b6 | b7 | b8 | - | b9 | b10 |
| | Diamine (molar ratio) | (b-1) | XTJ-542 | 0 | 0 | 5 | 0 | | 10 | 0 |
| | | | ED-900 | 5 | 10 | 0 | 10 | | 0 | 0 |
| | | (b-2) | Xylylenediamine | 95 | 90 | 90 | 90 | | 0 | 90 |
| | | | (MXDA/PXDA molar ratio) | (70/30) | (70/30) | (70/30) | (70/30) | | - | (70/30) |
| | Dicarboxylic acid (molar ratio) | (b-3) | Adipic acid | 0 | 0 | 0 | 100 | | 10 | 100 |
| | | | Sebacic acid | 100 | 100 | 100 | 0 | | 0 | 0 |
| | 12-Aminolauric acid | | | 0 | 0 | 0 | 0 | | 90 | 0 |
| | Physical properties | | Relative viscosity | 1.48 | 1.36 | 1.45 | 1.51 | | 1.25 | 2.20 |
| | | | Melting point (°C) | 207.6 | 201.9 | 208.1 | 249.9 | | 165.0 | 213.8 |
| Cylindrical molded body (thickness: 5 mm) | | | Layer configuration | C/B/C | C/B/C | C/B/C | C/B/C | C | C/B/C | C/B/C |
| | | | Thickness of layer (B) (mm) | 0.2 | 0.2 | 0.2 | 0.2 | - | 0.2 | 0.2 |
| Molding temperature | | | Extrusion temperature of layer (C) (°C) | 200 | 200 | 200 | 200 | 200 | 200 | 200 |
| | | | Extrusion temperature of layer (B) (°C) | 230 | 230 | 230 | 280 | - | 230 | 240 |
| | | | Channel temperature after lamination (°C) | 230 | 230 | 230 | 280 | - | 230 | 240 |
| Evaluation | | | | | | | | | | |
| | Flexibility | | | Not creased | Not creased | Not creased | Not creased | Not creased | Not creased | Creased |

(continued)

| | | Example | | | | Comparative Example | | |
|---|---|---|---|---|---|---|---|---|
| | | 5 | 6 | 7 | 8 | 2 | 3 | 4 |
| | Petroleum smell (fuel barrier properties) | Not scented with petroleum smell | Not scented with petroleum smell | Not scented with petroleum smell | Not scented with petroleum smell | Scented with petroleum smell | Scented with petroleum smell | Not scented with petroleum smell |

MXDA: m-Xylylenediamine
PXDA: p-Xylylenediamine
XTJ-542: Polyether diamine (manufactured by Huntsman Corporation)
ED-900: Polyether diamine (manufactured by Huntsman Corporation)

From Comparative Example 2, in the conventional cylindrical molded body composed of a polyethylene single layer, the petroleum pentrated into the inside, and the tap water was scented with the petroleum smell attached to the tap water. Thus, it is noted that the conventional cylindrical molded body is inferior in terms of fuel barrier properties.

On the other hand, in Examples 5 to 8, the cylindrical molded bodies were free from creases and a petroleum smell. Thus, it is noted that since the cylindrical molded body has the polyether polyamide layer (B), it is excellent in terms of both flexibility and fuel barrier properties.

In addition, from Comparative Examples 3 and 4, it is noted that even by providing the layer composed of a polyether polyamide or a polyamide produced without using either the polyether diamine compound (b-1) or the xylylenediamine (b-2) in place of the polyether polyamide layer (B), a cylindrical molded body excellent in terms of both flexibility and fuel barrier properties is not obtained.

Industrial Applicability

The first multilayer structure of the present invention has excellent properties in terms of pinhole resistance, oxygen barrier properties, and interlaminar adhesion strength, and therefore, it is suitable as a sheet and a film, each of which is used as a food packaging material, such as a pouch, a drawn container, a casing, a pillow package, etc.

The second multilayer structure of the present invention is a multilayer structure excellent in terms of flexibility and fuel barrier properties without hindering excellent flexibility as in polyolefin-made cylindrical molded bodies. For that reason, the second multilayer structure of the present invention is able to prevent a fuel, such as kerosene, etc., from penetration, and therefore, it is suitable for water service piping to be buried under the ground, especially water service piping for water supply.

**Claims**

1. A multilayer structure including a polyamide layer (A) and a polyether polyamide layer (B), wherein
the polyamide layer (A) comprises a polyamide (a) in which a diamine constituent unit thereof comprises a constituent unit derived from a xylylenediamine (a-1), and a dicarboxylic acid constituent unit thereof comprises a constituent unit derived from an α,ω-linear aliphatic dicarboxylic acid (a-2) having from 4 to 20 carbon atoms; and
the polyether polyamide layer (B) comprises a polyether polyamide (b) in which a diamine constituent unit thereof comprises constituent units derived from a polyether diamine compound (b-1) represented by the following general formula (1) and a xylylenediamine (b-2), and a dicarboxylic acid constituent unit thereof comprises a constituent unit derived from an α,ω-linear aliphatic dicarboxylic acid (b-3) having from 4 to 20 carbon atoms:

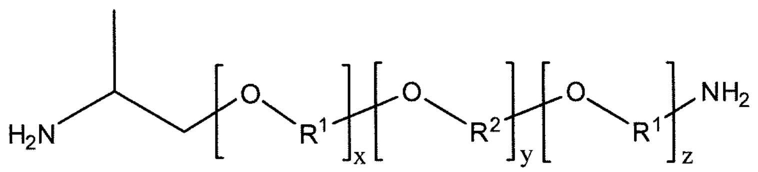
(1)

wherein (x + z) represents 1 to 60; y represents 1 to 50; each $-OR^1-$ independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.

2. The multilayer structure according to claim 1, wherein the xylylenediamine (b-2) is m-xylylenediamine, p-xylylenediamine, or a mixture thereof.

3. The multilayer structure according to claim 1 or 2, wherein the α,ω-linear aliphatic dicarboxylic acid (b-3) is at least one selected from the group consisting of adipic acid, sebacic acid, and a mixture thereof.

4. The multilayer structure according to any one of claims 1 to 3, wherein the polyamide (a) is poly-m-xylylene adipamide.

5. The multilayer structure according to any one of claims 1 to 4, having one or two or more of each of the polyamide layer (A) and the polyether polyamide layer (B).

6. The multilayer structure according to any one of claims 1 to 5, having at least a layer configuration of the polyether polyamide layer (B), the polyamide layer (A), and the polyether polyamide layer (B) in this order.

**7.** The multilayer structure according to any one of claims 1 to 6, wherein a thickness of the polyamide layer (A) is 1 to 200 μm.

**8.** The multilayer structure according to any one of claims 1 to 7, wherein the multilayer structure is a sheet or a film.

**9.** A multilayer structure including a polyolefin layer (C) and a polyether polyamide layer (B), wherein the polyether polyamide layer (B) comprises a polyether polyamide (b) in which a diamine constituent unit thereof comprises constituent units derived from a polyether diamine compound (b-1) represented by the following general formula (1) and a xylylenediamine (b-2), and a dicarboxylic acid constituent unit thereof comprises a constituent unit derived from an α,ω-linear aliphatic dicarboxylic acid (b-3) having from 4 to 20 carbon atoms:

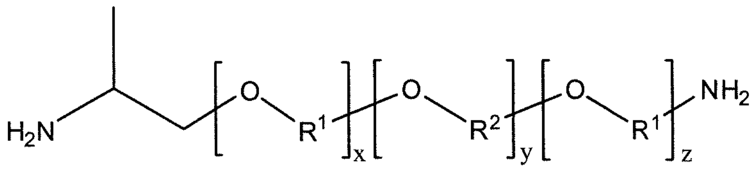
(1)

wherein (x + z) represents 1 to 60; y represents 1 to 50; each $-OR^1-$ independently represents $-OCH_2CH_2CH_2-$, $-OCH(CH_3)CH_2-$, or $-OCH_2CH(CH_3)-$; and $-OR^2-$ represents $-OCH_2CH_2CH_2CH_2-$ or $-OCH_2CH_2-$.

**10.** The multilayer structure according to claim 9, wherein the xylylenediamine (b-2) is m-xylylenediamine, p-xylylenediamine, or a mixture thereof.

**11.** The multilayer structure according to claim 9 or 10, wherein the α,ω-linear aliphatic dicarboxylic acid (b-3) is at least one selected from the group consisting of adipic acid, sebacic acid, and a mixture thereof.

**12.** The multilayer structure according to any one of claims 9 to 11, having one or two or more of each of the polyolefin layer (C) and the polyether polyamide layer (B).

**13.** The multilayer structure according to any one of claims 9 to 12, wherein the multilayer structure is a cylindrical molded body.

**14.** The multilayer structure according to claim 13, having at least a layer configuration of the polyolefin layer (C) and the polyether polyamide layer (B) in this order from the inside.

**15.** The multilayer structure according to claim 13 or 14, wherein a proportion of a thickness of the polyether polyamide layer (B) to a thickness of the cylindrical molded body is 0.005 to 0.5.

**16.** The multilayer structure according to any one of claims 13 to 15, wherein the multilayer structure is water service piping.

## INTERNATIONAL SEARCH REPORT

International application No.
PCT/JP2014/059768

A. CLASSIFICATION OF SUBJECT MATTER
*B32B27/32*(2006.01)i, *B32B1/08*(2006.01)i, *C08G69/40*(2006.01)i

According to International Patent Classification (IPC) or to both national classification and IPC

B. FIELDS SEARCHED

Minimum documentation searched (classification system followed by classification symbols)
B32B1/00-43/00, C08G69/00-69/50

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2007/145324 A1 (Ube Industries, Ltd.), 21 December 2007 (21.12.2007), claims 1, 14; paragraphs [0001], [0044], [0072], [0075], [0079], [0099]; examples & US 2009/0274913 A1 & EP 2036939 A1 & KR 10-2009-0020609 A & CN 101472975 A & TW 200825122 A | 1-16 |
| Y<br>A | JP 49-110744 A (Toyobo Co., Ltd.), 22 October 1974 (22.10.1974), claims; page 7, upper right column, line 4 to lower left column, line 1; examples & GB 1449315 A & DE 2405646 A1 & FR 2216316 A & IT 1009133 B | 9-16<br>1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>01 July, 2014 (01.07.14) | Date of mailing of the international search report<br>08 July, 2014 (08.07.14) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No. PCT/JP2014/059768

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | WO 2012/111636 A1 (Mitsubishi Gas Chemical Co., Inc.), 23 August 2012 (23.08.2012), claims; paragraphs [0014], [0046] to [0050], [0089] & TW 201239005 A | 9-16<br>1-8 |
| Y<br>A | JP 2005-315406 A (Bridgestone Corp.), 10 November 2005 (10.11.2005), claims 1 to 3, 6; fig. 2 & WO 2005/097903 A1 | 13-16<br>1-12 |
| A | JP 2012-061851 A (Ube Industries, Ltd.), 29 March 2012 (29.03.2012), entire text (Family: none) | 1-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007136874 A
- JP 4230060 B